# EUROPÄISCHE PATENTANMELDUNG

(11) **EP 3 190 470 A1**
(43) Veröffentlichungstag der Anmeldung: **12.07.2017**
(21) Anmeldenummer: 17000005.3
(22) Anmeldetag: 03.01.2017
(51) Int. Cl.: G05B 13/02, C05F 17/00, C05F 17/02, C05F 3/06, C02F 1/52, C02F 11/00, G01N 21/84

(54) **VORRICHTUNG ZUR SEPARATION VON STOFFGEMISCHEN IN MEHRERE PHASEN**

(30) Priorität: 04.01.2016 DE 102016100077
(71) Anmelder: Josef Kotte Landtechnik GmbH & Co. KG, 49597 Rieste (DE)
(72) Erfinder: Kotte, Stefan, 48151 Münster (DE); Barlage, Wilfried, 49626 Berge (DE)
(74) Vertreter: Weeg, Thomas

(57) **Zusammenfassung**

Die vorliegende Erfindung bezieht sich auf eine Vorrichtung zur Separation von Stoffgemischen in einem flüssigen Sekundärrohstoff in mehrere Phasen.

Es wird vorgeschlagen, dass die Vorrichtung eine Separationstechnik, eine Verstelltechnik, eine Sensorik, eine mit der Sensorik verbundene Anzeigevorrichtung zur Anzeige der ermittelten Sensordaten, eine mit der Sensorik verbundene Steuerungselektronik, die die übermittelten Sensordaten mit einer Software verarbeitet, und eine Steuerungseinrichtung mit einer Eingabevorrichtung, über die Sollwerte für einzelne Inhaltsstoffe, das Gewicht und/oder dem Volumen zumindest einer separierten Phase in die Steuerungselektronik der Steuerungseinrichtung eingebbar sind, aufweist, wobei die Verstelltechnik mit der Steuerungselektronik verbunden und von dieser so ansteuerbar ist, dass bei einer Eingabe eines Sollwerts in die Eingabevorrichtung die Trennparameter der Separationstechnik von der Verstelltechnik auf einen Wert eingestellt werden, bei der sich bei der Verarbeitung des Sekundärrohstoffs in der Vorrichtung der eingegebene Sollwert als Istwert für die jeweilige separierte Phase einstellt.

## Beschreibung

Die vorliegende Erfindung bezieht sich auf eine Vorrichtung zur Separation von Stoffgemischen in einem flüssigen Sekundärrohstoff in mehrere Phasen.

Eine gattungsgemäße Vorrichtung ist beispielsweise aus der Schrift DE 10 2013 003 592 A1 bekannt. Als flüssiger Sekundärrohstoff wird hier Gülle in eine Dickphase und in eine Dünnphase aufgetrennt. Je nach in der Vorrichtung eingesetzter Gülle ergeben sich für die Dickphase und die Dünnphase unterschiedliche Inhaltsstoffe, unterschiedliche Konzentrationen der Inhaltsstoffe und unterschiedliche Volumina und Gewichte für die einzelnen Phasen. Als flüssiger Sekundärrohstoff kommen für Zwecke dieser Erfindung aber auch andere Flüssigkeiten mit darin enthaltenen Stoffgemischen, wie beispielsweise auch Klärschlamm oder Schlachtabfälle, in Betracht.

Die aus dem Stand der Technik bekannte Differenzierung in eine Dünn- und Dickfraktion ist zu grob, um die in der Gülle oder anderen flüssigen Sekundärrohstoffen steckenden Inhaltsstoffe angemessen zu erfassen und zu verwerten. In der Schrift DE 10 2015 108 436.8 A1 ist eine Analysevorrichtung offenbart, mit der es möglich ist, bei Überladevorgängen von flüssigen Medien die darin enthaltenen Inhaltsstoffe zu erkennen, quantitativ zu erfassen und zu speichern und die gespeicherten Daten für spätere Nutzungen der flüssigen Medien verfügbar zu haben. Wenn die Inhaltsstoffe aber erst und nur bei Überladevorgängen erkannt werden, können die qualitativen Zusammensetzungen und Konzentrationen von Inhaltsstoffen nicht vorher gezielt beeinflusst werden, um die einzelnen verwertbaren Phasen des Sekundärrohstoffs auf erwünschte Parameter und Eigenschaften einzustellen.

Es ist die Aufgabe der vorliegenden Erfindung, eine Vorrichtung zu schaffen, mit der es möglich ist, bei einer Vorrichtung zur Separation von einem flüssigen Sekundärrohstoff die Anwesenheit von Inhaltsstoffen gezielter zu erkennen und die Verteilung von Inhaltsstoffen in bestimmten Phasen zu beeinflussen.

Die Aufgabe wird für eine gattungsgemäße Vorrichtung gelöst, indem die Vorrichtung
a) eine Separationstechnik, mit der der Sekundärrohstoff in mehrere voneinander getrennte Phasen aufgeteilt wird,
b) eine Verstelltechnik, mit der die Trennparameter der Separationstechnik zur Trennung der verschiedenen Phasen des Sekundärrohstoffs voneinander unterschiedlich einstellbar sind,
c) eine Sensorik
   - zur qualitativen Erfassung von Inhaltsstoffen im Sekundärrohstoff vor der Separation und in zumindest einer der separierten Phasen nach der Separation und
   - zur quantitativen Erfassung des Sekundärrohstoffs vor der Separation und von zumindest einer der separierten Phasen nach der Separation,
d) eine mit der Sensorik verbundene Anzeigevorrichtung zur Anzeige der ermittelten Sensordaten,
e) eine mit der Sensorik verbundene Steuerungselektronik, die die übermittelten Sensordaten mit einer Software verarbeitet, und
f) eine Steuerungseinrichtung mit einer Eingabevorrichtung, über die Sollwerte für einzelne Inhaltsstoffe, das Gewicht und/oder dem Volumen zumindest einer separierten Phase in die Steuerungselektronik der Steuerungseinrichtung eingebbar sind,
aufweist, wobei die Verstelltechnik mit der Steuerungselektronik verbunden und von dieser so ansteuerbar ist, dass bei einer Eingabe eines Sollwerts in die Eingabevorrichtung die Trennparameter der Separationstechnik von der Verstelltechnik auf einen Wert eingestellt werden, bei der sich bei der Verarbeitung des Sekundärrohstoffs in der Vorrichtung der eingegebene Sollwert als Istwert für die jeweilige separierte Phase einstellt.

Mit der erfindungsgemäß ausgestalteten Vorrichtung ist es möglich, für bestimmte Nutzungen eher wertvolle Inhaltsstoffe in einer dafür geeigneten Phase zu konzentrieren, während andere für bestimmte Nutzungen weniger wertvolle Inhaltsstoffe in einer anderen Phase angesammelt werden können. Die erfindungsgemäße Kombination der Verstelltechnik mit der Sensortechnik in einer gattungsgemäßen Vorrichtung ermöglicht es, aus einem Sekundärrohstoff mehrere unterschiedliche Phasen zu bilden, die im Hinblick auf ihre jeweilige geplante Verwertung einen optimierten Mix an Inhaltsstoffen aufweisen. Für die geplante Verwendung vorteilhafte Inhaltsstoffe können gezielt angereichert werden, während die für eine geplante Verwendung nachteiligen Inhaltsstoffe reduziert oder ganz aus dieser Phase eliminiert werden können.

Über die Aufteilung des flüssigen Sekundärrohstoffs in mehr als eine Dünnphase und in eine Dickphase können beispielsweise aus der Dünnphase gezielt weitere Phasen separiert werden. So ist es mit einer geeigneten Separationstechnik möglich, den in der Dünnphase enthaltenen Phosphor in einer eigenen Phase anzureichern. Eine solche Phase mit einem gezielt angehobenen Phosphoranteil ist für einen Weiterverarbeiter erheblich wertvoller als eine in dieser Hinsicht unauffällige Dünnphase mit normaler Konzentration des Phosphors. Durch die Vorgabe bestimmter Konzentrationen des Phosphors in der Dünnphase kann eine eigene Phosphor-Phase gebildet werden, die für sich handelbar ist. Genauso können die übrigen Phasen mit reduziertem Phosphoranteil für Weiterverwender besser brauchbar sein, so dass auch der Wert dieser Phasen im Verhältnis zu solchen mit üblichem Phosphorgehalt steigt.

In der Güllephase, die zur Entsorgung und Düngung auf landwirtschaftliche Flächen ausgebracht wird, sind aus Geruchs- und Emissionsgründen höhere Ammoniak-Konzentrationen nicht erwünscht. Vorstoffe für das Ammoniak sind Stickstoff und Wasserstoff, die miteinander zu dem Gas NH₃ reagieren. Wenn eine Phase des flüssigen Sekundärrohstoffs zur Ausbringung auf den Acker vorgesehen ist, können in einer solchen Phase mit der erfindungsgemäßen Vorrichtung die Vorstoffe für das Ammoniak oder die Stoffgemische, die die Vorstoffe enthalten, oder solche Stoffe, die die Reaktionsfähigkeit der Vorstoffe zu Ammoniak beeinflussen, auf einen gewünschten höheren oder niedrigeren Zielwert eingestellt werden. Andererseits können in einer solchen Phase Stickstoff und Stickstoff-Verbindungen durchaus erwünscht sein, so dass es vorteilhaft ist, deren Konzentration in dieser Phase des ursprünglichen Sekundärrohstoffs anzuheben, indem der Steuerungselektronik dafür eine höhere Konzentration als Sollwert vorgegeben wird. Je nachdem, ob dem Dünge- oder dem Emissionsaspekt ein Vorrang eingeräumt wird, kann die Steuerungselektronik also erfindungsgemäß die Verstelltechnik so steuern, dass der Konzentrationsgrad des Stickstoffs oder der Stickstoffverbindungen in der Phase auf die eine oder andere Priorität hin - Düngeeffekt oder Verringerung von Geruchsemissionen - optimiert wird.

Auch ist es mit der erfindungsgemäßen Vorrichtung möglich, Phasen des Sekundärrohstoffs zu homogenisieren. Die fehlende Homogenisierung von einzelnen Phasen behindert ihre Handelbarkeit und gezielte Verwendbarkeit. Während Gülle heute ganz unterschiedliche Inhaltsstoffe in schwankenden Konzentrationen beinhalten kann, ermöglicht es die erfindungsgemäße Vorrichtung, bestimmte für die Handelbarkeit der Phasen relevante Parameter in die Eingabevorrichtung einzugeben, so dass die Separationsvorrichtung über die Steuerungselektronik gezielt eine Phase aus dem Sekundärrohstoff bildet, in der eine vorgewählte Mindestkonzentration von Stickstoff oder Phosphor oder eine Höchstkonzentration von Ammoniak enthalten ist, so dass sich ein Abnehmer dieser Fraktion, wie beispielsweise ein Landwirt, der seine Flächen mit einer gezielten Menge von Stickstoff düngen will, eine entsprechende Phase des Sekundärrohstoffs ohne Schwierigkeiten verwenden und seine Ausbringetechnik auf die Eigenschaften dieser Phase einstellen kann. Ein Landwirt, der eine solche Phase verarbeitet, kann aber beispielsweise auch davon ausgehen, dass diese Phase keine unzulässig hohen Ammoniak- oder Stickstoffwerte enthält, die seinem Acker schaden könnten, ohne dass er aus Sorgfaltsgründen laufend eigene Messungen über die Zusammensetzung der ausgebrachten Phase durchführen müsste.

Als Separationstechnik können je nach zu verarbeitendem Sekundärrohstoff und Verwendungszwecken der durch die Separation erzielten Phasen einzelne oder mehrere verschiedene Separationstechniken eingesetzt werden. In Betracht kommen physikalische Trennverfahren, wie beispielsweise Vorrichtungen zum Destillieren, Dekantieren, Filtrieren, Sieben, Sublimieren, und/oder andere Trennverfahren, wie chemische und/oder mechanische Trennverfahren. In der Vorrichtung wird eine solche Trenntechnik oder eine Kombination von Trenntechniken eingesetzt, wie sie für die jeweils anzureichernden oder auszuscheidenden Substanzen und Stoffe, die im zu verarbeitenden Sekundärrohstoff enthalten sind, geeignet sind. So werden beispielsweise Walzenpressen, Rollenseparatoren oder Pressschneckenseparatoren verwendet, um Feststoffe aus Gülle abzuscheiden. Die Separation von verschiedenen Phasen in einem Sekundärrohstoff kann aber auch über Zentrifugalabscheider, Dekanter, Entspannungsflotationsanlagen mit einem Auftreiben und Abziehen des Schlamms oder mittels Rührwerken erfolgen. Die Separation kann auch durch das Zudosieren von Ausfällmitteln und anschließender Filterung oder Schlammabsaugung der ausgefällten Stoffe erfolgen. Um eine Separation bestimmter Inhaltsstoffe zu ermöglichen und/oder bestimmte Parameter in einer Phase einhalten zu können, ist es auch möglich, in der Separationstechnik Zudosiertechnik einzusetzen, mit der bestimmte Chemikalien und/oder Mineralstoffe einer Phase oder dem Sekundärrohstoff insgesamt in einer geeigneten Menge zudosiert werden.

Mit der Verstelltechnik sind die Maschinenelemente in der Separationstechnik gemeint, mit der die Stoffflüsse innerhalb der Vorrichtung eingestellt und geregelt werden. Die Verstelltechnik kann aus verstellbaren Pumpen, Ventilen, Drosseln, Filtern, Sieben, Überläufen, Skimmern, Abscheidern, motorisch angetriebenen Förderorganen wie Förderschnecken und Rührwerken, Druckreglern, aber auch verstellbaren oder mit unterschiedlichen Durchflussmengen beschickbaren Kühlern, Heizungen oder Dosiervorrichtungen für die Zudosierung oder Abscheidung von Stoffen bestehen. Um aus dem Sekundärrohstoff mehrere Phasen bilden zu können, sind in der Vorrichtung verschiedene Stoffkreisläufe durch Rohrleitungen, Tanks und Trennvorrichtungen vorgegeben, deren Beschickung, Durchlauf- und Verweilzeiten, Zustände und Umgebungsbedingungen über die Verstelltechnik nach Bedarf variabel sind. So können in der Vorrichtung, soweit das für die Veränderung der jeweils zu beeinflussenden Parameter vorteilhaft ist, auch unterschiedliche Temperaturen, Drücke, Bewegungsgeschwindigkeiten und Bewegungsrichtungen der einzelnen Phasen eingestellt und verändert werden.

Als Sensorik können verschiedene Sensoren verwendet werden, die zur Ermittlung des jeweils relevanten Parameters geeignet sind. So werden für die qualitative Erfassung Sensoren verwendet, die das jeweilige Qualitätsmerkmal messtechnisch erfassen und in ein elektronisches Sensorsignal umsetzen können. Für die quantitative Erfassung werden geeignete Sensoren zur Mengenmessung eingesetzt, die volumetrisch und/oder gewichtsmäßig erfolgen kann.

Die Sensorwerte können je nach Bedarf für den in die Vorrichtung eingegebenen ursprünglichen Sekundärrohstoff und/oder für die jeweils in der Vorrichtung abgetrennten Phasen und/oder auch für die in der Vorrichtung gebildeten Zwischenprodukte ermittelt werden. Dadurch ist es möglich, nicht nur bestimmte Parameter in den Phasen zu bestimmen, die die Vorrichtung als fertiges Produkt verlassen, sondern es können die Wertigkeiten von Inhaltsstoffen in der oder den Ausgangsphasen bestimmt, Regelungsmöglichkeiten innerhalb der Vorrichtung zur gezielten Beeinflussung des Separationsprozesses geschaffen, Inhaltsstoffe und/oder Stoffströme ermittelt und dokumentiert und für nachgeordnete Verwendungen der jeweiligen Phasen oder für Nachweiszwecke bereitgestellt werden.

Die Anzeigevorrichtung wie beispielsweise ein Bildschirm oder ein Display ermöglicht es einem Bediener, die Separationsvorgänge in der Vorrichtung zu überwachen und in die Bearbeitungsabläufe einzugreifen, wenn ihm dies erforderlich erscheint. Durch die Anzeigevorrichtung können aktuelle Istwerte der gemessenen Parameter angezeigt oder vorgegebene Sollwerte mit den aktuellen Istwerten der jeweiligen Parameter verglichen werden. Die Anzeigevorrichtung kann mit Eingabevorrichtungen verbunden sein, wie Softkeys auf einem Bildschirm oder zusätzlichen Tasten, um Sollvorgaben zu verändern oder zuvor gewählte Einstellungen an der Vorrichtung zu verändern, die ebenfalls über die Anzeigevorrichtung angezeigt werden können. Als Anzeigevorrichtung können nicht nur speziell für die Vorrichtung hergestellte Displays, sondern auch Smartphones mit entsprechenden Apps, Tablet-Computer oder PCs mit einer entsprechenden Software verwendet werden, die mit der Elektronik der Vorrichtung über einen Stecker mit Kabel oder drahtlos über Funk oder Infrarot kommunizieren.

In der Vorrichtung ist eine geeignete Steuerungselektronik vorgesehen. Diese kann auch dazu genutzt werden, um die Sensordaten elektronisch verarbeiten und anzeigen zu können. Die Steuerungselektronik verfügt dann dazu zumindest über Schnittstellen zu den Sensoren und zur Anzeigevorrichtung. Insbesondere dient die Steuerungselektronik aber dazu, Einstellungen der Verstelltechnik in der Vorrichtung zu erfassen und beeinflussen zu können. Dazu muss zumindest eine Schnittstelle zur Verstelltechnik der Separationstechnik vorhanden sein, um mit der Verstelltechnik zu kommunizieren. Über diese Schnittstelle kann die Steuerungselektronik die Verstelltechnik beeinflussen. Die Beeinflussung kann je nach Umfang der Steuerungselektronik nur auf eine manuelle Eingabe einer Bedienperson hin oder teil- oder vollautomatisch durch eine entsprechende Software erfolgen. Die Beeinflussung geschieht beispielsweise, indem ein Ventil geöffnet oder geschlossen, eine Pumpe an- oder ausgeschaltet oder ihre Leistung erhöht oder abgesenkt, eine Siebeinstellung verändert, ein Druckregler verstellt, eine Zudosiervorrichtung an- oder abgeschaltet oder ähnliche Einstell- oder Schaltvorgänge ausgeführt werden.

Nach einer Ausgestaltung der Erfindung ist die Steuerungselektronik in einer Regelschleife betreibbar, bei der von der Steuerungselektronik ein aktuell gemessener Sensorwert für den Sekundärrohstoff und/oder zumindest eine separierte Phase mit einem dafür zuvor gemessenen Sensorwert verglichen wird, das aus dem Vergleich ermittelte Resultat bewertet und als Steuergröße für die Ansteuerung der Verstelltechnik verarbeitet wird, bis der Sollwert dem Istwert entspricht. Durch die Regelschleife kann kontrolliert werden, ob sich der aktuell gemessene Sensorwert in eine gewünschte Richtung verändert. So kann beispielsweise überprüft werden, ob sich die Konzentration von Stickstoff in einer untersuchten Phase durch eine Betätigung der Verstelltechnik in gewünschter Weise erhöht oder verringert, oder ob die Verstelltechnik erneut betätigt werden muss, um den Sollwert des untersuchten Stoffes im Sekundärrohstoff und/oder in der separierten Phase zu erreichen.

Nach einer Ausgestaltung der Erfindung weist die Sensorik zur qualitativen Erfassung von Inhaltsstoffen zumindest einen NIR-Sensor auf. NIR-Sensoren arbeiten im Near Infrared -Bereich und nutzen einen Frequenzbereich von 100-385 THz bei einer Wellenlänge von 0,78-3,0 µm, um in einer Prüfcharge bestimmte Substanzen zu erkennen. Die NIR-Sensoren haben sich für die Untersuchung von Sekundärrohstoffen als sehr robust und zuverlässig erwiesen, ohne deshalb erhebliche Nachteile bei der genauen und qualitativen Erkennung von zu suchenden Substanzen in Kauf nehmen zu müssen.

Nach einer Ausgestaltung der Erfindung weist die Sensorik zur quantitativen Erfassung des Sekundärrohstoffs eine Wiegevorrichtung und/oder eine volumetrische Mengenerfassungsvorrichtung auf. Über die quantitative Erfassung des Sekundärrohstoffs und der einzelnen Phasen können Inputs und Outputs des Sekundärrohstoffes erfasst und dokumentiert werden. Die quantitativen Sensorwerte können dazu genutzt werden, die Sensorwerte in relative Messgrößen zu verrechnen, die Vergleiche ermöglichen. So können beispielsweise Inhaltsstoffe pro kg, Tonne oder Liter der jeweiligen Phase angegeben werden, oder es können Trockenmassegehalte pro Tonne oder Kubikmeter eines initialen Sekundärrohstoffes und der voneinander getrennten Phasen angegeben werden.

Nach einer Ausgestaltung der Erfindung werden die von der Sensorik an die Steuerungselektronik übermittelten Sensordaten mit einer Software zu einer Dokumentationsdatei verarbeitet, in der die qualitativ und quantitativ erfassten Inhaltsstoffe den separierten Phasen zugeordnet abgespeichert sind. Die Dokumentationsdatei kann von der Elektronik der nachfolgenden Verarbeitungsmaschinen übernommen werden, wie beispielsweise der Steuerungselektronik von Gülleausbringfahrzeugen, oder sie wird genutzt, um Dokumentationspflichten gegenüber Aufsichtsbehörden zu erfüllen. Bevorzugt wird die Dokumentationsdatei in einem Dateiformat erstellt, das leicht kommunizierbar und weiterverabeitbar ist. Das ist der Fall, wenn die Dokumentationsdatei von Smartphones, Tabletcomputern, PCs und vergleichbarer Consumer-Elektronikhardware, gegebenenfalls unter Verwendung eines gesonderten Softwareprogramms oder einer App, verarbeitet werden kann.

Nach einer Ausgestaltung der Erfindung ist ein Messsensor zur qualitativen Erfassung von Inhaltsstoffen von mehreren Phasen eines Sekundärrohstoffs in der Vorrichtung angeordnet. Die Erfassung von Inhaltsstoffen in mehreren Phasen des Sekundärrohstoffs ist möglich, indem der Messsensor mit den Input- und Outputleitungen für die jeweiligen Phasen verbunden ist, um Messungen in der jeweiligen Phase vornehmen zu können. Die Verbindung kann erfolgen, indem der Messsensor zwischen verschiedenen Messstellen hin und her verfahrbar ist, um in unterschiedlichen Positionen unterschiedliche Phasen untersuchen zu können. Alternativ oder ergänzend können auch Verbindungs- oder Bypassleitungen vorgesehen sein, die für jeweils vorzunehmende Messungen das zu messende Material an dem Messsensor vorbeiführen. Die Verbindungs- oder Bypassleitungen werden dann über Ventile jeweils so geschaltet, dass eine aktuell zu messende Phase an dem Messsensor vorbeigeführt wird. Die jeweiligen Phasen werden dann nacheinander am Messsensor vorbeigeführt, um durch Mischungen verfälschte Messergebnisse zu vermeiden. Die Ventile und Leistungen werden dazu entsprechend geschaltet und gesteuert. Die Messungen können mit Zeitverzögerung erfolgen, um zuvor das Messergebnis verfälschende Materialreste aus einer anderen Phase sicher abfördern zu können. Als Phase können auf diese Weise nicht nur die separierten Phasen nach der Separation, sondern auch der eingangs der Vorrichtung zugeförderte Sekundärrohstoff auf Inhaltsstoffe untersucht werden. Die Verwendung nur eines Messsensors für verschiedene Phasen eines Sekundärrohstoffs ist dann sinnvoll, wenn als Messsensoren sehr teure Sensoren verwendet werden. Entsprechendes gilt für die Verwendung nur eines Messsensors zur quantitativen Erfassung des Sekundärrohstoffs und/oder von einer oder mehreren der separierten Phasen.

## Patentansprüche

1. Vorrichtung zur Separation von Stoffgemischen in einem flüssigen Sekundärrohstoff in mehrere Phasen,
**dadurch gekennzeichnet, dass** die Vorrichtung
a) eine Separationstechnik, mit der der Sekundärrohstoff in mehrere voneinander getrennte Phasen aufgeteilt wird,
b) eine Verstelltechnik, mit der die Trennparameter der Separationstechnik zur Trennung der verschiedenen Phasen des Sekundärrohstoffs voneinander unterschiedlich einstellbar sind,
c) eine Sensorik
- zur qualitativen Erfassung von Inhaltsstoffen im Sekundärrohstoff vor der Separation und in zumindest einer der separierten Phasen nach der Separation und
- zur quantitativen Erfassung des Sekundärrohstoffs vor der Separation und von zumindest einer der separierten Phasen nach der Separation,
d) eine mit der Sensorik verbundene Anzeigevorrichtung zur Anzeige der ermittelten Sensordaten,
e) eine mit der Sensorik verbundene Steuerungselektronik, die die übermittelten Sensordaten mit einer Software verarbeitet, und
f) eine Steuerungseinrichtung mit einer Eingabevorrichtung, über die Sollwerte für einzelne Inhaltsstoffe, das Gewicht und/oder dem Volumen zumindest einer separierten Phase in die Steuerungselektronik der Steuerungseinrichtung eingebbar sind,
aufweist, wobei die Verstelltechnik mit der Steuerungselektronik verbunden und von dieser so ansteuerbar ist, dass bei einer Eingabe eines Sollwerts in die Eingabevorrichtung die Trennparameter der Separationstechnik von der Verstelltechnik auf einen Wert eingestellt werden, bei der sich bei der Verarbeitung des Sekundärrohstoffs in der Vorrichtung der eingegebene Sollwert als Istwert für die jeweilige separierte Phase einstellt.

2. Vorrichtung nach Anspruch 1, **dadurch gekennzeichnet, dass** die Steuerungselektronik in einer Regelschleife betreibbar ist, bei der von der Steuerungselektronik ein aktuell gemessener Sensorwert für den Sekundärrohstoff und/oder zumindest eine separierte Phase mit einem dafür zuvor gemessenen Sensorwert verglichen wird, das aus dem Vergleich ermittelte Resultat bewertet und als Steuergröße für die Ansteuerung der Verstelltechnik verarbeitet wird, bis der Sollwert dem Istwert entspricht.

3. Vorrichtung nach Anspruch 1 oder 2, **dadurch gekennzeichnet, dass** die Sensorik zur qualitativen Erfassung von Inhaltsstoffen einen NIR-Sensor aufweist.

4. Vorrichtung nach einem der vorhergehenden Ansprüche, **dadurch gekennzeichnet, dass** die Sensorik zur quantitativen Erfassung des Sekundärrohstoffs eine Wiegevorrichtung und/oder eine volumetrische Mengenerfassungsvorrichtung aufweist.

5. Vorrichtung nach einem der vorhergehenden Ansprüche, **dadurch gekennzeichnet, dass** die von der Sensorik an die Steuerungselektronik übermittelten Sensordaten mit einer Software zu einer Dokumentationsdatei verarbeitet werden, in der die qualitativ und quantitativ erfassten Inhaltsstoffe den separierten Phasen zugeordnet abgespeichert sind.

6. Vorrichtung nach einem der vorhergehenden Ansprüche, **dadurch gekennzeichnet, dass** ein Messsensor zur qualitativen Erfassung von Inhaltsstoffen von mehreren Phasen eines Sekundärrohstoffs in der Vorrichtung angeordnet ist.

7. Vorrichtung nach einem der vorhergehenden Ansprüche, **dadurch gekennzeichnet, dass** ein Messsensor zur quantitativen Erfassung des Sekundärrohstoffs und/oder von einer oder mehreren der separierten Phasen in der Vorrichtung angeordnet ist.
